# EUROPÄISCHE PATENTSCHRIFT

(11) **EP 0 566 879 B1**
(45) Veröffentlichungstag und Bekanntmachung des Hinweises auf die Patenterteilung: **05.03.1997**
(21) Anmeldenummer: 93104716.1
(22) Anmeldetag: 23.03.1993
(51) Int. Cl.: B28D 1/18, B23D 45/12, B24B 19/02, B28B 21/92

(54) **Vorrichtung zur Rundbearbeitung eines Rohres**
Device for working the outer periphery of a pipe
Dispositif pour travailler sur la périphérie d'un tuyau

(30) Priorität: 18.04.1992 DE 9205382 U
(43) Veröffentlichungstag der Anmeldung: 27.10.1993
(73) Patentinhaber: WENSAUER BETONWERK GmbH, D-63811 Stockstadt (DE)
(72) Erfinder: Wensauer, Gerhard, W-8750 Aschaffenburg (DE); Tritzschak, Eberhard, W-6074 Rödermark (DE)
(74) Vertreter: Köhler, Günter, Dipl.-Ing.

(56) Entgegenhaltungen:
- DE-A- 2 605 196
- DE-A- 2 949 921
- US-A- 3 699 828
- US-A- 3 820 424
- US-A- 4 612 730

## Beschreibung

Die Erfindung bezieht sich auf eine Vorrichtung zur Rundbearbeitung eines Rohres, insbesondere Beton- oder Stahlbetonrohres, dessen Querschnitt etwa oval ist und geringfügig von der Kreisform abweicht, mittels eines spanabnehmenden, durch einen Motor angetriebenen Werkzeugs, insbesondere eines Fräswerkzeugs, das an einem radial relativ zum Rohr verstellbaren Gestell angebracht ist, wobei zwischen Rohr und Gestell eine relative Drehbewegung um die Längsmittelachse des Rohres ausführbar ist.

Zur Abwasserableitung verwendete Muffenrohre aus Beton oder Stahlbeton werden beim Trennen der Formhälften bei der Herstellung häufig unrund, da das Entformen im noch nicht ausgehärteten Zustand der Rohre erfolgt und die Formhälften zunächst am Rohr haften, so daß sie das Rohr beim Trennen radial etwas auseinanderziehen. Der Rohrquerschnitt erhält dabei eine ovale, angenähert elliptische Form, bei der die große Ellipsenachse allerdings nur geringfügig, bis zu etwa 6 oder 7 % von der kleinen Ellipsenachse abweicht. Diese Unrundheit erschwert die Herstellung einer dichten Verbindung zwischen zwei derartigen Rohren, bei der das Spitzende des einen Rohres in die Muffe des anderen Rohres eingeführt und der Spalt zwischen Muffe und Spitzende durch einen elastomeren Dichtring abgedichtet wird. Dieser Dichtring muß zum Ausgleich der vornehmlich auf seiten des Spitzendes auftretenden Unrundheit überdimensioniert sein und erschwert dadurch das Zusammenstecken der Rohre, nachdem der Dichtring auf dem Spitzende angeordnet worden ist. Darüber hinaus führt die örtlich aufgrund der Überdimensionierung zu starke Verpressung des Dichtrings im Laufe der Zeit zu einer bleibenden Verformung des Dichtringmaterials, so daß der Dichtring thermisch bedingte Durchmesseränderungen der Rohre nicht mehr ausgleichen kann und die Verbindung undicht wird.

Es ist daher eine Vorrichtung der eingangs erwähnten Art entwickelt worden, um die Unrundheit am Spitzende der Rohre zu beseitigen.

Bei einer bekannten, im Handel erhältlichen Vorrichtung dieser Art wird das Fräswerkzeug auf einer Kreisbahn geführt, deren Durchmesser dem gewünschten Durchmesser des Rohres am Ort des Dichtrings entspricht. Zuvor wird das Rohr im Mittelpunkt der Kreisbahn zentriert. Zu diesem Zweck sind am Maschinengestell vier in Winkelabständen von 90° radial zum Mittelpunkt der Kreisbahn gerichtete Hydraulikzylinder befestigt, die außen über Rollen gegen das Rohr drücken. Nach der Zentrierung wird das Rohr axial auf vier Rollen geschoben, die einen Umkreis mit einem dem Innendurchmesser des Rohres entsprechenden Durchmesser tangieren und an der Stirnseite einer konzentrisch zum Mittelpunkt der Kreisbahn des Fräswerkzeugs starr gelagerten Tragscheibe um Achsen drehbar gelagert sind, die in einer Querebene des Rohres liegen. Danach werden die Hydraulikzylinder vom Umfang des Rohres abgestellt, und das rotierende Fräswerkzeug wird um das Rohr herumgeführt. Die beim Fräsen abgenommenen staubartigen Späne werden mit dem Kühlwasser des Fräswerkzeugs zu Schlamm vermischt, der bei dem Umlauf des Fräswerkzeugs verspritzt und zu einer erheblichen Verschmutzung der Vorrichtung selbst und ihrer Umgebung führt. Sodann ist diese Vorrichtung wegen der Vielzahl der Hydraulikzylinder aufwendig.

Aus der US-A-3 699 823 ist eine Vorrichtung zur Ausbildung einer umlaufenden Nut in einem Rohr bekannt. Sie enthält ein spanabnehmendes Werkzeug, das an einem relativ zum Rohr verstellbaren Gestell angebracht ist, wobei zwischen Rohr und Gestell eine relative Drehbewegung um die Längsachse des Rohres ausführbar ist. Das Werkzeug ist über zwei in Richtung der Drehbewegung im gleichen Drehwinkelabstand zwischen 30° und 60° vor und hinter dem Werkzeug am Gestell ortsfest gelagerte Stützrollen, deren Drehachsen parallel zur Mittelachse des Rohres liegen, am Rohr abstützbar. Das Gestell steht in Radialrichtung zum Rohr hin unter einer nachgiebigen Vorbelastung. Das Werkzeug ist am Gestell radial zum Rohr bis zur Anlage eines Tiefenanschlags an der Außenseite des Rohres verstellbar gelagert. Der Tiefenanschlag dient zur Einstellung der Eindringtiefe des Werkzeugs in die Rohrwand und damit der Einstellung der Tiefe der Nut. Das Werkzeug wird durch eine sich am Gestell abstützende Feder gegen das Rohr gedrückt. Bei einem unrunden Rohr wird das Werkzeug daher radial zum Gestell und damit relativ zu den Stützrollen gegen die Kraft der Federn verschoben, so daß auch bei einem unrunden Rohr die Tiefe der Nut konstant bleibt. Die Nut wird daher ebenfalls unrund.

Die US-A-3 820 424 offenbart eine Vorrichtung mit den Merkmalen des Anspruchs 1 mit Ausnahme des wesentlichen Merkmals, daß das Gestell unter einer nachgiebigen Vorbelastung steht.

Die durch die US-A-4 777 723 bekannte Vorrichtung wirkt stets mit einer Manschette um das Rohr zusammen, wobei Werkzeugstützrollen an der Manschette und nicht an Rohr anliegen.

Die beiden letztgenannten Vorrichtungen dienen zum vollständigen Durchtrennen von Rohren.

Der Erfindung liegt die Aufgabe zugrunde, eine einfachere Vorrichtung der eingangs genannten Art anzugeben.

Erfindungsgemäß ist diese Aufgabe dadurch gelöst, daß das Werkzeug über zwei am Rohr anliegende, in Richtung der Drehbewegung im gleichen Drehwinkelabstand von 30° bis 60° vor und hinter dem Werkzeug am Gestell ortsfest gelagerte Stützrollen, deren Drehachsen parallel zur Längsmittelachse des Rohres liegen, am Rohr abgestützt ist, daß das Gestell in Radialrichtung zum Rohr hin unter einer nachgiebigen Vorbelastung steht, und daß das Werkzeug am Gestell radial zum Rohr verstellbar gelagert und in der eingestellten Lage festgestellt ist.

Bei dieser Lösung kommt man mit lediglich einer Stellvorrichtung für die radiale Verstellung des Gestells aus. Obwohl sich das Werkzeug nur über zwei Stützrollen am Rohr abstützt, wird das Rohr dennoch überraschenderweise auf einer nahezu fehlerfreien Kreisbahn bearbeitet.

Besonders gering sind die Abweichungen von der Kreisbahn, wenn der genannte Drehwinkelabstand etwa 45° beträgt.

Sodann ist es günstig, wenn die Stützrollen wenigstens auf der einen Seite der Schneidbahn des Werkzeugs mit dem Rohr zur Anlage bringbar sind. Auf diese Weise ist es möglich, zur Aufnahme des Dichtrings, insbesondere eines Rundschnurrings (0-Rings), auch eine Nut mit einem praktisch kreisförmigen Innendurchmesser in der Außenseite des Rohres einzuarbeiten oder den Nutengrund einer zuvor bei der Herstellung des Rohres geformten Nut kreisförmig zu bearbeiten, ohne daß sich die Stützrollen am Nutengrund abstützen.

Sodann kann dafür gesorgt sein, daß das Rohr um seine Längsmittelachse, an Lagerrollen anliegend, drehbar gelagert und durch einen Motor um seine Längsmittelachse in Drehung versetzbar ist. Bei dieser Ausbildung kann das Werkzeug ortsfest bleiben, so daß eine einfache Abführung von Frässchlamm ohne allseitige Verschmutzung der Vorrichtung und ihrer Umgebung möglich ist.

Die Erfindung und ihre Weiterbildung werden nachstehend anhand der Zeichnung eines bevorzugten Ausführungsbeispiels näher beschrieben. Es zeigen:
Fig. 1 eine schematische Darstellung eines rund zu bearbeitenden Rohres und einer erfindungsgemäßen Rundbearbeitungsvorrichtung vom einen Ende des Rohres her gesehen,
Fig. 2 eine schematische Seitenansicht des Rohres nach Fig. 1 und der Rundbearbeitungsvorrichtung und
Fig. 3 einen Ausschnitt der zu verbindenden Enden zweier Muffenrohre aus Beton oder Stahlbeton im Axialschnitt.

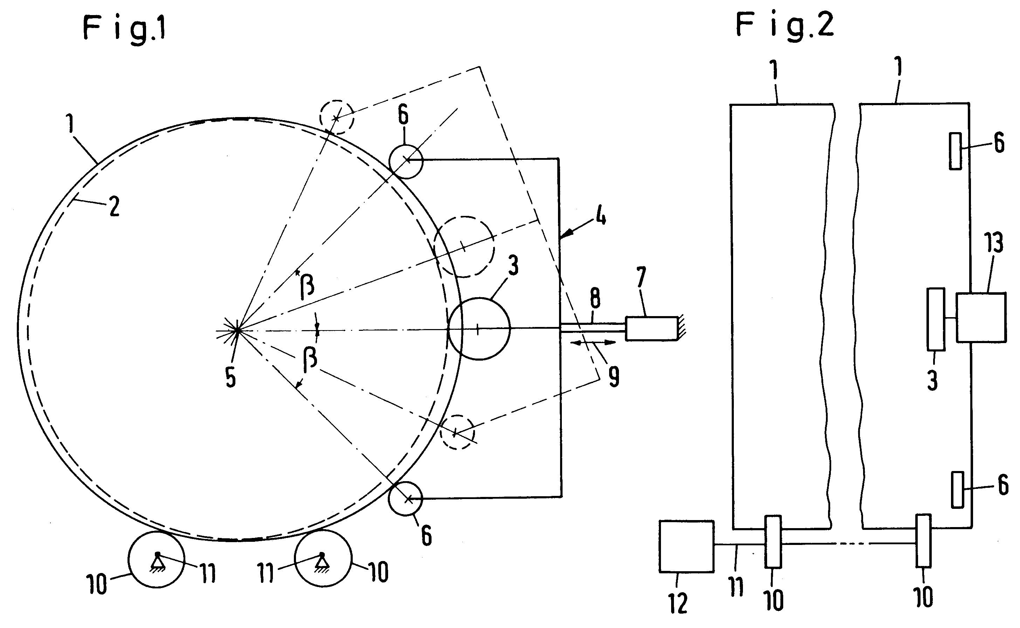

In Fig. 1 ist zur Vereinfachung der Darstellung lediglich die Außenkontur des Querschnitts eines etwa ovalen Rohres 1 dargestellt, die geringfügig von der Form eines gestrichelt dargestellten Kreises 2 abweicht und angenähert auch als elliptisch angesehen werden kann. Die größte Abweichung der Kontur des Rohres 1 von der des Kreises 2 beträgt im dargestellten Beispiel etwa 7 %. Bei einer entsprechenden Ellipse wäre mithin die große Achse etwa um 7 % größer als die kleine Achse. Zur Rundbearbeitung des Rohres 1, so daß seine Kontur zumindest angenähert der des Kreises 2 entspricht, ist eine Vorrichtung vorgesehen, die ein spanabnehmendes Werkzeug 3, hier ein Fräswerkzeug, aufweist, das an einem radial relativ zum Rohr 1 verstellbaren Gestell 4 angebracht ist. Zwischen Rohr 1 und Gestell 4 ist eine relative Drehbewegung um die Längsmittelachse 5 des Rohres 1 ausführbar. Das Werkzeug 3 ist über zwei in Richtung der Drehbewegung im gleichen Drehwinkelabstand β von 30° bis 60°, vorzugsweise 45°, vor und hinter dem Werkzeug 3 am Gestell 4 ortsfest gelagerte Stützrollen 6 am Rohr abstützbar, wobei die Drehachsen der Stützrollen parallel zur Längsmittelachse 5 des Rohres 1 liegen.

Das Gestell 4 steht in Radialrichtung zum Rohr 1 hin unter einer nachgiebigen Vorbelastung, die durch einen Fluidzylinder 7, einen Hydraulik- oder Pneumatikzylinder, dessen Kolbenstange 8 mit dem Gestell 4 verbunden ist, bewirkt wird, wobei das Gestell 4 in Richtung des Doppelpfeils 9 verschiebbar ist, bis die Stützrollen 6 am Umfang des Rohres 1 anliegen und im Verlaufe der Bearbeitung des Rohres 1 weiterhin mit dem Rohr 1 in Berührung bleiben.

Das Rohr 1 ist um seine Längsmittelachse 5, an Lagerrollen 10 anliegend, drehbar gelagert. Die Lagerrollen 10 sind symmetrisch zu beiden Seiten einer vertikalen Axialebene des Rohres 1 angeordnet, wobei mehrere Lagerrollen 10 jeweils auf einer Welle 11 drehfest gelagert sind. Die eine Welle 11 ist durch einen Motor 12 antreibbar, so daß das Rohr 1 durch den Motor 12 um seine Längsmittelachse 5 relativ zu dem ortsfesten Gestell 4 in Drehung versetzbar ist.

Das Werkzeug 3 ist am Gestell 4 radial zum Rohr 1 (in nicht dargestellter Weise) verstellbar gelagert und in der eingestellten Lage feststellbar, um es auf den gewünschten Durchmesser des Kreises 2 einzustellen.

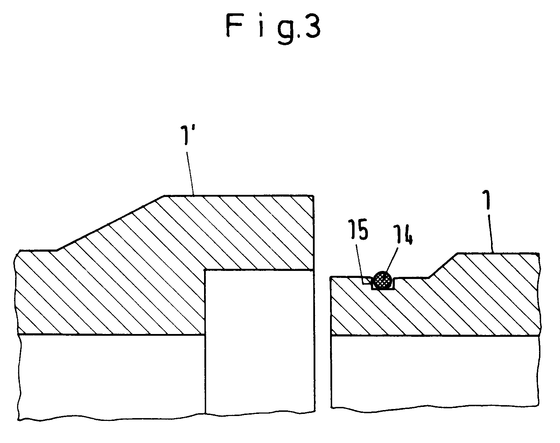

Wie Fig. 2 zeigt, sind die Stützrollen 6 auf der einen Seite der Schneidbahn des Werkzeugs 3 mit dem Rohr 1 zur Anlage bringbar, so daß das von einem gestellfesten Motor 13 angetriebene Werkzeug 3 bei der Rundbearbeitung des Nutengrundes einer zur Aufnahme eines Dichtrings 14 gemäß Fig. 3 im Spitzende eines Muffenrohres 1 ausgebildeten Nut 15 sich weiterhin über die Stützrollen 6 am Rohrumfang abstützen kann. Allerdings wäre es auch möglich, die Stützrollen 6 so breit auszubilden, daß sie sich beiderseits der Nut 15 am Umfang des Spitzendes abstützen. Gegebenenfalls könnten die Stützrollen 6 und das Werkzeug 3 in der gleichen Radialebene des Rohres 1 liegen.

Wie Fig. 3 weiter zeigt, wird das Spitzende des Rohres 1, nachdem der Nutengrund der Nut 15 bearbeitet worden ist, zusammen mit dem Dichtring 14 in das Muffenende eines anzuschließenden Rohres 1' eingeführt, um die beiden Rohre 1 und 1' dicht zu verbinden.

Zur Vereinfachung der Darstellung der Wirkungsweise der Rundbearbeitungsvorrichtung ist in Fig. 1 das Gestell 4 relativ zum Rohr 1 in dessen Umfangsrichtung in die gestrichelt dargestellte Lage verdreht eingezeichnet, obwohl im dargestellten Ausführungsbeispiel das Rohr durch den Motor 12 relativ zur Rundbearbeitungsvorrichtung um seine Längsmittelachse 5 gedreht wird. Wie die gestrichelt dargestellte Lage der Rundbearbeitungsvorrichtung zeigt, liegt der Bearbeitungspunkt zwischen Rohr 1 und Werkzeug 3 auch nach einer relativen Verdrehung von Rohr 1 und Rundbearbeitungsvorrichtung praktisch auf dem Kreis 2, wobei sich in der Praxis bei einem Nenndurchmesser des Rohres 1 von 600 mm mit einer anfänglich maximalen Abweichung von 1 % vom Nenndurchmesser nach der Rundbearbeitung eine maximale Abweichung von nur etwa 1,5 mm ergab. Auch bei einem Nenndurchmesser von 1400 mm und einem anfänglichen Rundheits-Fehler von 1 % betrug die maximale Durchmesserabweichung nach der Bearbeitung ebenfalls nur etwa 1,5 mm, prozentual mithin weniger.

Die Tatsache, daß der Bearbeitungspunkt des Werkzeugs 3 im Verlaufe der Bearbeitung praktisch auf einer Kreisbahn um die Längsmittelachse 5 bleibt, läßt sich anschaulich dadurch erklären, daß sich die eine Stützrolle 6 im Verlaufe der Bearbeitung etwa um den gleichen Betrag von der Längsmittelachse entfernt, wie sich die andere Stützrolle 6 der Längsmittelachse 5 nähert, so daß das in der Mitte zwischen beiden Stützrollen 6 liegende Werkzeug 3 praktisch den gleichen Abstand von der Längsmittelachse 5 beibehält. Dies setzt lediglich voraus, daß die sogenannte "numerische Exzentrizität" der angenähert durch das Rohr 1 dargestellten Ellipse verhältnismäßig klein ist, wie es in der Praxis bei derartigen Rohren der Fall ist.

Abwandlungen von dem beschriebenen Ausführungsbeispiel können darin bestehen, daß anstelle der auf einer der Wellen 11 angeordneten Lagerrollen 10 eine der Stützrollen 6 durch einen Motor angetrieben wird, um das Rohr 1 während der Rundbearbeitung relativ zur Rundbearbeitungsvorrichtung zu drehen.

Während das Gestell 4 horizontal auf (nicht dargestellten) Führungsschienen und zugleich auf (nicht dargestellten) vertikalen Führungsschienen zusammen mit dem Zylinder 7 verschiebbar ist, so daß die Verschiebungsrichtung des Werkzeugs 3 am Gestell sich selbsttätig auf die Längsmittelachse 5 ausrichtet, ist es auch möglich, das Gestell 4 oberhalb des Rohres 1 so anzuordnen, daß das Werkzeug 3 in einer vertikalen Axialebene des Rohres 1 relativ zum Gestell 4 verschiebbar ist. In diesem Falle braucht das Gestell 4 lediglich vertikal, unabhängig von der Größe des Nenndurchmesser des Rohres, verstellbar zu sein.

Statt die Stützrollen 6 mit der Außenseite des Rohres 1 zur Anlage zu bringen, können sie auch mit der Innenseite des Rohres 1 zur Anlage gebracht werden, um das Werkzeug 3 am Rohr 1 abzustützen.

Sodann kann anstelle der Ausbildung einer Nut im Spitzende des Rohres 1 auch nur das Spitzende rund bearbeitet werden.

## Patentansprüche

1. Vorrichtung zur Rundbearbeitung eines Rohres, insbesondere Beton- oder Stahlbetonrohres, dessen Querschnitt etwa oval ist und geringfügig von der Kreisform abweicht, mittels eines spanabnehmenden, durch einen Motor (13) angetriebenen Werkzeugs (3), insbesondere eines Fräswerkzeugs, das an einem radial relativ zum Rohr (1) verstellbaren Gestell (4) angebracht ist, wobei zwischen Rohr (1) und Gestell (4) eine relative Drehbewegung um die Längsmittelachse (5) des Rohres (1) ausführbar ist, wobei das Werkzeug (3) über zwei am Rohr (1) anliegende, in Richtung der Drehbewegung im gleichen Drehwinkelabstand (β) von 30° bis 60° vor und hinter dem Werkzeug (3) am Gestell (4) ortsfest gelagerte Stützrollen (6), deren Drehachsen parallel zur Längsmittelachse (5) des Rohres (1) liegen, am Rohr (1) abgestützt ist und das Gestell (4) in Radialrichtung zum Rohr (1) hin unter einer nachgiebigen Vorbelastung steht, wobei das Werkzeug (3) am Gestell (4) radial zum Rohr (1) verstellbar gelagert und in der eingestellten Lage festgestellt ist.

2. Vorrichtung nach Anspruch 1,
**dadurch gekennzeichnet**,
daß der Drehwinkelabstand (β) etwa 45° beträgt.

3. Vorrichtung nach einem der Ansprüche 1 oder 2,
**dadurch gekennzeichnet**,
daß das Rohr (1) um seine Längsmittelachse (5), an Lagerrollen (10) anliegend, drehbar gelagert und durch einen Motor (12) um seine Längsmittelachse (5) in Drehung versetzbar ist.

## Claims

1. Device for circular processing of a pipe, especially concrete or reinforced concrete pipe, the cross-section of which is approximately oval and departs slightly from the circular, by means of a machining tool (3), especially a milling tool, which is driven by a motor (13) and mounted at a frame (4) radially adjustable relative to the pipe (1), wherein a relative movement about the longitudinal centre axis (5) of the pipe (1) can be executed between pipe (1) and frame (4), wherein the tool (3) is supported at the pipe (1) by way of two support rollers (6) which bear against the pipe (1), are mounted in fixed location at the frame (4) at the same rotational angle spacing (β) of 30° to 60° in front of and behind the tool (3) in direction of the rotational movement, and the rotational axes of which lie parallelly to the longitudinal centre axis (5) of the pipe (1), and the frame (4) stands under a resilient preloading in radial direction relative to the pipe (1), wherein the tool (3) is mounted at the frame (4) to be adjustable relative to the pipe (1) and is fixed in the set position.

2. Device according to claim 1, characterised thereby that the rotational angle spacing (β) amounts to about 45°.

3. Device according to one of claims 1 and 2, characterised thereby that the pipe (1) is mounted to be rotatable about its longitudinal centre axis (5) and bearing on mounting rollers (10) and can be set into rotation about its longitudinal centre axis (5) by a motor (12).

## Revendications

1. Dispositif d'usinage circulaire d'un tube, en particulier d'un tube en béton ou en béton armé, dont la section transversale est à peu près ovale et diffère légèrement de la forme circulaire, au moyen d'un outil (3) travaillant par enlèvement de copeaux, entraînés par un moteur (13), en particulier un outil de fraisage, monté sur un bâti (4) réglable radialement par rapport au tube (1), un mouvement de rotation relatif étant susceptible d'être effectué autour de l'axe longitudinal (5) du tube (1), entre le tube (1) et le bâti (4), l'outil (3) étant soutenu sur le tube (1) par deux rouleaux d'appui (6) tourillonnant en un point fixé sur le bâti (6) appuyant sur le tube (1) situé devant et derrière l'outil (3), selon le même espacement angulaire de rotation (β) de 30° à 60°, dans la direction du mouvement de rotation, rouleaux d'appui (6) dont les axes de rotation sont parallèles à l'axe longitudinal (5) du tube (1), et le bâti (4) étant soumis à une pré-sollicitation accompagnée de déformation, en direction radiale par rapport au tube (1), l'outil (3) étant monté à rotation sur le bâti (4), de façon réglable par rapport au tube (1) et étant fixé dans la position réglée.

2. Dispositif selon la revendication 1, caractérisé en ce que l'espacement angulaire de rotation (β) est d'environ 45°.

3. Dispositif selon l'une des revendications 1 ou 2, caractérisé en ce que le tube (1) est monté à rotation autour de son axe médian longitudinal (5), avec appui sur les rouleaux de tourbillonnement (10) et peut être mis en rotation autour de son axe longitudinal (5) au moyen d'un moteur (12).
